# EUROPÄISCHE PATENTSCHRIFT

(11) **EP 2 215 864 B1**
(45) Veröffentlichungstag und Bekanntmachung des Hinweises auf die Patenterteilung: **31.08.2011**
(21) Anmeldenummer: 08845566.2
(22) Anmeldetag: 27.10.2008
(51) Int. Cl.: H04W 12/08, H04L 29/06

(54) **Verfahren zum Anmelden eines Mobilteils an eine Basisstation und funkgesteuertes Kommunikationssystem mit einem solchen Verfahren**
Method for registering a mobile part at a base station and radio-controlled communication system having such a method
Procédé d'entrée en communication d'une partie mobile avec une station de base et système de communication commandé par radio fonctionnant selon ledit procédé

(30) Priorität: 31.10.2007 DE 102007000613
(43) Veröffentlichungstag der Anmeldung: 11.08.2010
(73) Patentinhaber: Gigaset Communications GmbH, 81379 München (DE)
(72) Erfinder: TÖBBEN, Wilfried, 49624 Löningen (DE)
(74) Vertreter: Michalski Hüttermann & Partner Patentanwälte
(86) Internationale Anmeldenummer: PCT/EP2008/064505
(87) Internationale Veröffentlichungsnummer: WO 2009/056512

(56) Entgegenhaltungen:
- DE-A1- 4 236 778
- "Digital Enhanced Cordless Telecommunications (DECT); Common Interface (CI); Part 7: Security features; ETS 300 175-7" 1. September 1997 (1997-09-01), ETSI STANDARDS, LIS, SOPHIA ANTIPOLIS CEDEX, FRANCE , XP014012260 ISSN: 0000-0001 das ganze Dokument

## Beschreibung

Die Erfindung betrifft ein Verfahren zum Anmelden eines Mobilteils an eine Basisstation gemäß dem Oberbegriff des Anspruchs 1. Die Erfindung betrifft weiter basierend auf einem solchen Verfahren ein funkgesteuertes Kommunikationssystem gemäß dem Oberbegriff des Anspruchs 8.

Funkgesteuerte Kommunikationssysteme wie z.B. DECT- oder WLAN-Kommunikationssysteme umfassen eine Basisstation sowie mindestens ein Mobilteil als ein Teilnehmer an dem betreffenden System. Das Mobilteil wird und/oder die Basisstation wird von einem Kunden oder Benutzer benutzt.

Die Teilnehmer beziehungsweise die Mobilteile müssen, da keine direkte Drahtverbindung zur zugehörigen Basisstation besteht, über eine sogenannte Anmeldeprozedur mit der Basisstation verbunden beziehungsweise an der Basisstation angemeldet werden. Um unberechtigte Anmeldungen zum Beispiel von in nachbarschaftlichen Wohnungen befindlichen Mobilteilen zu verhindern, ist die Eingabe einer PIN-Nummer als Beispiel einer allgemeinen Authorisierungs-Information notwendig.

Soweit nachfolgend von einer PIN-Nummer gesprochen wird, ist darunter stets eine allgemeine Autorisierungs-Information zu verstehen. Sie könnte also auch ein anderes Aussehen als eine konkrete PIN-Nummer haben.

Marktuntersuchungen haben jedoch gezeigt, dass viele Benutzer mit der Eingabe der korrekten PIN-Nummer überfordert sind und die Geräte, Basisstation und/oder Mobilteil, wieder zurück zum Händler bringen.

Das Problem wird dadurch intensiviert, dass die für das Anmelden eines Mobilteils an einer zugehörigen Basisstation manuell oder automatisch gestartete Anmeldeprozedur in der Weise ausgelegt ist, dass sie nach einer falsch eingegebenen PIN-Nummer die Anmeldeprozedur komplett abbricht. Die Anmeldeprozedur muss dann ganz neu wieder eingeleitet werden.

Damit ein Benutzer eines obigen funkgesteuerten Kommunikationssystems zurechtkommt, werden die Geräte zum Beispiel mit einem vorangemeldeten Status ausgeliefert.

Ein anderer Ansatz ist, eine automatische Anmeldung zu realisieren, die dann aktiviert wird, wenn ein Mobilteil zum Beispiel in die Basisstation eingestellt wird.

Eine solche Methode ist beispielsweise bei sogenannten Gigaset-Kommunikationssystemen realisiert. Wird dort das Mobilteil in die Lademulde der Basisstation eingestellt, wird die automatische Anmeldeprozedur durchlaufen, so dass das Mobilteil an der Basisstation angemeldet wird, ohne dass dafür die Eingabe einer PIN-Nummer durch einen Benutzer erforderlich ist.

Eine automatische Anmeldung könnte aber beispielsweise auch dann gestartet werden, wenn das Mobilteil in eine eigene Ladeschale eingestellt wird oder wenn das Mobilteil eingeschaltet wird und noch an keiner Basisstation angemeldet ist.

Diese Mechanismen greifen allerdings nicht, wenn ein bestehendes System-durch den Zukauf eines zusätzlichen Mobilteils erweitert wird oder wenn die Basisstation nicht über eine Lademulde verfügt.

Bekannt ist weiter, dass viele funkgesteuerte Kommunikationssysteme eine fest eingestellte Basis-PIN-Nummer, eine sogenannte Default-PIN-Nummer, haben. Ein Beispiel für eine solche Default-PIN-Nummer ist die PIN-Nummer: 0000.

Auch hier sei erwähnt, dass unter Default-PIN-Nummer nur ein Beispiel für allgemein gesehen eine Default-Authorisierungs-Information zu sehen ist.

Das Dokument DE 42 36 778 A1 offenbart ein Verfahren zum Zusammenschluss von Sende-/Empfangseinrichtungen eines Schnurlos-Kommunikationssystems zu einer kommunikationsfähigen Einheit. Durch eine Ergänzungsmeldung an die Mobilstation und ein Legitimationswort von der Mobilstation wird vermieden, dass die Sende-/Empfangseinrichtungen beliebig zusammenschliessbar sind.

Um die Überforderung von Benutzern bei der Anmeldung eines Mobilteils an eine zugehörige Basisstation weiter zu reduzieren, ist es Aufgabe der Erfindung, ausgehend von einem Verfahren der eingangs genannten ein solches Verfahren weiter zu vereinfachen.

Außerdem ist es im gleichen Zusammenhang Aufgabe der Erfindung ausgehend von einem funkgesteuerten Kommunikationssystem der eingangs genannten Art ein solches funkgesteuertes Kommunikationssystem in der Weise zu verbessern, dass die Überforderung eines Benutzers bei der Anmeldung eines Mobilteils an eine zugehörige Basisstation weiter reduziert ist.

Der erste Teil der gestellten Aufgabe wird erfindungsgemäß durch ein Verfahren zum Anmelden eines Mobilteils an eine Basisstation gelöst, das die im kennzeichnenden Teil des Anspruchs 1 angegebenen Verfahrensschritte aufweist.

Der zweite Teil der gestellten Aufgabe wird erfindungsgemäß durch ein funkgesteuertes Kommunikationssystem gelöst, das die im kennzeichnenden Teil des Anspruchs 8 angegebenen Merkmale aufweist.

Danach wird ein Verfahren beansprucht mit mehreren Verfahrensschritten. Dabei wird durch das Mobilteil automatisch eine für das funkgesteuerte Kommunikationssystem maßgebende Default-Authorisierungs-Information an die Basisstation übermittelt. Weiter wird in einem nachfolgenden Verfahrensschritt durch die Basisstation bei der Prüfung auf Korrektheit der übermittelten Authorisierungs-Information die Korrektheit der übermittelten Authorisierungs-Information erkannt, solange eine bei der Prüfung auf Korrektheit herangezogene Referenz-Authorisierungs-Information noch nicht geändert wurde.

Mit der Referenz-Authorisierungs-Information ist die in der Basisstation gespeicherte Authorisierungs-Information gemeint, die bei Inbetriebnahme des Geräts mit der Default-Authorisierungs-Information des Systems übereinstimmt und die von einem Kunden beziehungsweise einem Benutzer verändert werden kann.

Es wird durch die Basisstation die übermittelte Authorisierungs-Information auf das Vorliegen der Default-Authorisierungs-Information überprüft, wenn die Basisstation die Inkorrektheit der übermittelten Authorisierungs-Information erkennt.

Wird hier das Vorliegen der Default-Authorisierungs-Information erkannt, schaltet die Basisstation in einen Anmeldestatus, der eine weitere Übermittlung von Authorisierungs-Informationen durch das Mobilteil zulässt. Dabei schaltet die Basisstation nach Erhalt einer solchen Authorisierungs-Information sich jeweils wieder in den gleichen Verfahrensschritt, in dem die Basisstation die Authorisierungs-Information auf Korrektheit überprüft.

Wird dagegen das nicht Vorliegen der Default-Authorisierungs-Information erkannt, bricht die Basisstation die Anmeldeprozedur ab

Bezüglich des erfindungsgemäßen funkgesteuerten Kommunikationssystems sind die Basisstation und ein an der Basisstation angemeldetes Mobilteil für die Durchführung des erfindungsgemäßen Verfahrens in der Weise ausgestattet, dass jeweils entsprechend ausgebildete technische Mittel vorhanden sind.

Mit den erfindungsgemäßen Verfahrensschritten und den vorhandenen technischen Mitteln in der Basisstation und einem betreffenden Mobilteil wird die Anmeldeprozedur vereinfacht, in dem das Mobilteil automatisch einen ersten Anmeldeversuch mit der fest eingestellten Basis-PIN-Nummer startet. Ist diese Basis-PIN-Nummer noch gültig, zum Beispiel weil ein betreffender Kunde sie noch nicht geändert hat, was nach der Erfahrung bei den meisten betreffenden Kommunikationssystemen der Fall ist, kann die Anmeldeprozedur für dieses Mobilteil sofort vollständig abgeschlossen werden. Der betreffende Kunde braucht überhaupt keine PIN-Nummer einzugeben.

Falls die PIN-Nummer jedoch nicht mehr gültig ist, weil zum Beispiel ein betreffender Kunde sie bereits verändert hat, scheitert der erste automatische Anmeldeversuch. Die Basisstation erkennt aber anhand der sogenannten Default-PIN-Nummer, dass es sich bei diesem Anmeldeversuch um einen automatischen Anmeldeversuch des Mobilteils und nicht um eine Falscheingabe durch einen Benutzer handelt. Die Basisstation erlaubt dann in diesem Fall unmittelbar einen zweiten Anmeldeversuch, bei dem der betreffende Benutzer beziehungsweise Kunde jetzt manuell die richtige PIN-Nummer eingeben muss.

Dieser zweite Anmeldeversuch wird, wie gesagt, automatisch eingeleitet, ohne dass also die Basisstation oder das Mobilteil erneut anmeldebereit gemacht werden müssen. Die Anmeldeprozedur ist deshalb auch aus diesem Grund vereinfacht.

Der Vorteil der vorgestellten Lösung besteht nochmals gesagt also darin, dass der Benutzer, der die Default-PIN-Nummer des Systems nicht verändert hat, bei der Anmeldung des Mobilteils an der Basisstation keine PIN-Nummer eingeben muss. Somit ist für eine Vielzahl der Kunden die Anmeldung möglich, ohne dass sie eine PIN-Nummer eingeben müssen. Wurde die Basis-PIN-Nummer bereits verändert, erkennt die Basisstation anhand der Basis-PIN-Nummer den automatischen Anmeldeversuch und wertet diesen nicht als Fehlversuch, sondern erlaubt stattdessen dem Benutzer unmittelbar danach einen neuen, manuellen Anmeldeversuch, ohne dass die laufende Anmeldeprozedur dabei unterbrochen wird.

Vorteilhafte Ausgestaltungen der Erfindung sind Gegenstand von Unteransprüchen.

Danach wird für eine weitere Übermittlung der Authorisierungs-Information die Authorisierungs-Information vom Benutzer eingegeben. Der Benutzer hat damit die konkrete Möglichkeit, die Anmeldeprozedur erfolgreich abzuschließen.

Bei einer anderen vorteilhaften Ausgestaltung der Erfindung bricht die Basisstation die Anmeldeprozedur nach einer vorgegebenen Anzahl von sich wiederholenden Schleifendurchläufen ab, so dass es zu keiner unendlichen Schleifenbildung bei der Anmeldeprozedur kommt.

Ein sich wiederholender Schleifendurchlauf in der Anmeldeprozedur kann gegebenenfalls auftreten, wenn beim zweiten Anmeldeversuch durch den Benutzer die Basis-PIN-Nummer manuell eingegeben wird.

Bei einer anderen vorteilhaften Ausgestaltung der Erfindung wird die Anmeldeprozedur zur Anmeldung eines Mobilteils an eine zugehörige Basisstation in der Basisstation automatisch gestartet, wenn das Mobilteil in die Lademulde einer zugehörigen Basisstation gestellt wird.

Bei einer weiteren vorteilhaften Ausgestaltung der Erfindung wird die Anmeldeprozedur zur Anmeldung eines Mobilteils an eine zugehörige Basisstation in dem Mobilteil automatisch gestartet, wenn das Mobilteil in die Lademulde einer zugehörigen Basisstation gestellt wird, oder wenn das Mobilteil eingeschaltet wird und noch an keiner Basisstation angemeldet ist.

Der jeweilige automatische Start der Anmeldeprozedur vereinfacht die Handhabung des Benutzers wesentlich, weil er für den Start der Anmeldeprozedur keinerlei manuelle Maßnahmen ergreifen muss.

Kennzeichnet das Mobilteil die automatisch übermittelte Authorisierungs-Information als automatisch übermittelte Authorisierungs-Information durch Übermittlung einer zusätzlichen Information, ist sichergestellt, dass der Basisstation bekannt ist, dass es sich bei der übermittelten Authorisierungs-Information um eine automatisch übermittelte Authorisierungs-Information handelt.

Entsprechendes gilt für das Mobilteil, wenn die Basisstation dem Mobilteil vor der Übermittlung der Authorisierungs-Information bekannt gibt, dass es das Verfahren nach einem der Ansprüche 1 bis 6 unterstützt. Das Mobilteil kann dann daran gehindert werden, dass es nach dem beanspruchten Verfahren arbeitet, wenn die Basisstation gar nicht in der Lage ist, in entsprechender Weise zu arbeiten.

Bezüglich eines konkreten funkgesteuerten Kommunikationssystems besteht eine vorteilhafte Ausgestaltung der Erfindung darin, dass die jeweils entsprechend ausgebildeten technischen Mittel durch diskrete Bauelemente gebildet sind, die elektro- und nachrichtentechnisch miteinander zusammenwirken und wenigstens zum Teil programmgesteuert arbeiten.

Mit einer solchen Merkmalskombination lässt sich ein gewünschtes funkgesteuertes Kommunikationssystem mit kleinsten Abmessungen aufbauen.

Nachfolgend wird ein Ausführungsbeispiel der Erfindung anhand einer Zeichnung näher erläutert. Darin zeigen:
- Figur 1: ein prinzipielles Ablaufdiagram des erfindungsgemä- ßen Verfahrens, und
- Figur 2: ein prinzipielles erfindungsgemäßes funkgesteuertes Kommunikationssystem.

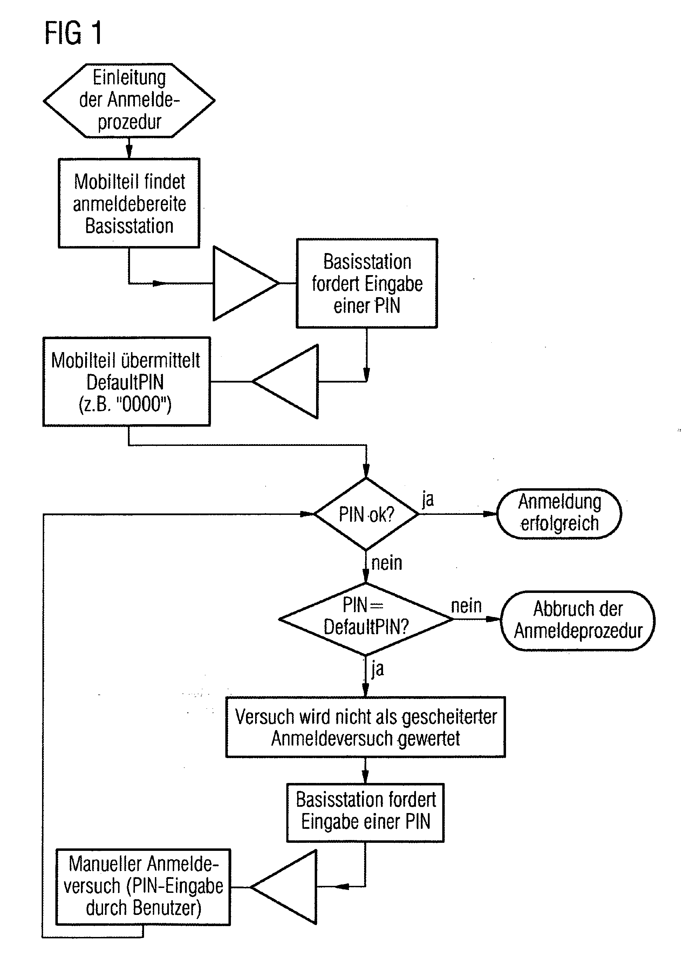

Gemäß der Figur 1 erfolgt zunächst die Einleitung der Anmeldeprozedur durch Auftritt eines vorfestgelegten Ereignisses. Dieses kann beispielsweise das Einstellen des Mobilteils in die Lademulde der Basisstation sein. Es könnte aber auch ein manuell erzeugtes Ereignis sein.

Nach dem Einleiten der Anmeldeprozedur findet das Mobilteil eine anmeldebereite Basisstation vor.

Die Basisstation fordert dann die Eingabe einer PIN-Nummer an. Dies kann auch implizit erfolgen.

Handelt es sich bei der Einleitung der Anmeldeprozedur um eine automatische Einleitung der Anmeldeprozedur, übermittelt das Mobilteil automatisch eine darin eingespeicherte, fest eingestellte Basis-PIN-Nummer, die sogenannte Default-PIN-Nummer, an die Basisstation.

Handelt es sich um eine manuelle Einleitung der Anmeldeprozedur durch einen Benutzer, könnte auch eine manuell eingegebene PIN-Nummer an dieser Stelle übermittelt werden, was aber im Ablaufdiagramm nicht näher dargestellt ist, weil es nicht Teil der erfindungsgemäßen Maßnahmen ist.

Unabhängig davon, wie die PIN-Nummer generiert worden ist oder ob sie gültig ist oder nicht, prüft die Basisstation die Korrektheit der übermittelten PIN-Nummer.

Wird die übermittelte PIN-Nummer als korrekt erkannt, war die Anmeldung erfolgreich und die Anmeldeprozedur wird beendet.

Wird die übermittelte PIN-Nummer als nicht korrekt erkannt, erfolgt durch die Basisstation die Überprüfung der PIN-Nummer daraufhin, ob die übermittelte PIN-Nummer die sogenannte Default-PIN-Nummer ist.

Handelt es sich nicht um die sogenannte Default-PIN-Nummer, wird die Anmeldeprozedur abgebrochen. Eine Neuanmeldung ist dann nur noch möglich, wenn die Anmeldeprozedur gänzlich von Neuem gestartet wird.

Handelt es sich jedoch um die sogenannte Default-PIN-Nummer, wird der Anmeldeversuch als nicht gescheitert angesehen und die Anmeldeprozedur wird nicht abgebrochen. Stattdessen fordert die Basisstation die manuelle Eingabe einer PIN-Nummer durch den Benutzer.

Diese manuell eingegebene PIN-Nummer wird dann durch die Basisstation wieder auf Korrektheit überprüft.

Wird die manuell eingegebene PIN-Nummer als korrekt erkannt, ist der Anmeldeversuch erfolgreich.

Wird die manuell eingegebene PIN-Nummer als nicht korrekt erkannt, wird wieder geprüft, ob es sich bei der manuell eingegebenen PIN-Nummer um die sogenannte Default-PIN-Nummer handelt.

Handelt es sich hier nicht um die sogenannte Default-PIN-Nummer, wird die Anmeldeprozedur abgebrochen. Eine Neuanmeldung ist dann nur noch möglich, wenn die Anmeldeprozedur gänzlich von Neuem gestartet wird.

Handelt es sich jedoch um die sogenannte Default-PIN-Nummer, wird der Anmeldeversuch als nicht gescheitert angesehen und die Anmeldeprozedur wird nicht abgebrochen. Stattdessen fordert die Basisstation die manuelle Eingabe einer PIN-Nummer durch den Benutzer.

Der Vorgang wiederholt sich dann, wie vorhin schon beschrieben.

In einer vorteilhaften Ausgestaltung der erfindungsgemäßen Anmeldeprozedur, die in der Figur 1 nicht näher dargestellt ist, ist die Anzahl erlaubter Wiederholungen festgelegt. In einem konkreten Anwendungsfall kann diese Anzahl eins sein.

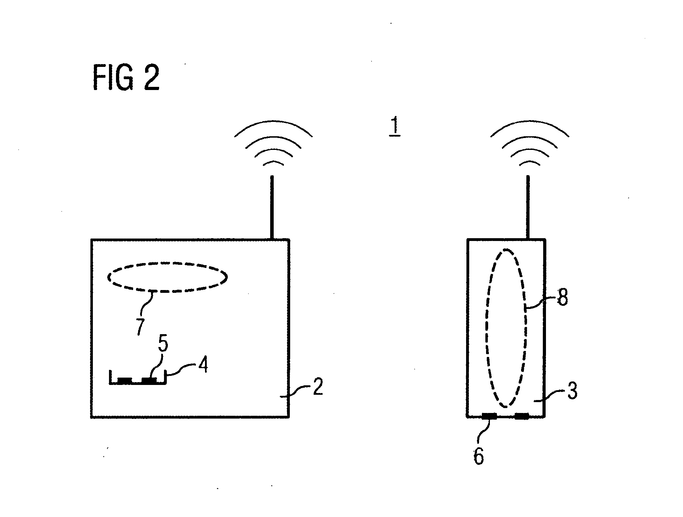

In der Figur 2 ist ein erfindungsgemäßes funkgesteuertes Kommunikationssystem 1 gezeigt, das eine Basisstation 2 und wenigstens ein einziges Mobilteil 3 umfasst.

Das Mobilteil 3 ist dabei an der Basisstation 2 gemäß der im Zusammenhang mit der Figur 1 beschriebenen Anmeldeprozedur angemeldet.

Die Basisstation 2 weist eine Lademulde 4 mit entsprechenden elektrischen Ladepins 5 auf.

Das Mobilteil 3 weist zu den Ladepins 5 der Basisstation 2 entsprechende Gegenladepins 6 auf.

Die Anmeldeprozedur, mit deren Hilfe das Mobilteil 3 an der Basisstation 2 angemeldet ist, ist gemäß dem vorliegenden Ausführungsbeispiel nach Figur 2 dadurch initiiert, dass das Mobilteil 3 in die Lademulde 4 der Basisstation 2 irgendwann einmal eingestellt worden ist, so dass sich die Ladepins 5 der Lademulde 4 der Basisstation 2 und die Ladepins 6 des Mobilteils 3 gegenseitig kontaktierten.

Zur Durchführung der besagten Anmeldeprozedur weisen die Basisstation 2 und das Mobilteil 3 jeweils entsprechend ausgebildete technische Mittel 7 für die Basisstation 2 beziehungsweise 8 für das Mobilteil 3 auf.

Dabei sind gemäß dem vorliegenden Ausführungsbeispiel die jeweils entsprechend ausgebildeten technischen Mittel 7 beziehungsweise 8 durch diskrete Bauelemente gebildet, die elektro- und nachrichtentechnisch miteinander zusammenwirken und wenigstens zum Teil programmgesteuert arbeiten.

## Patentansprüche

1. Verfahren zum Anmelden eines Mobilteils an eine Basisstation zum Bilden eines funkgesteuerten Kommunikationssystems miteinander, aufweisend Verfahrensschritte einer automatisch oder manuell gestarteten Anmeldeprozedur, in der zunächst das Mobilteil eine anmeldebereite Basisstation sucht, in der daraufhin von Seiten des Mobilteils eine Authorisierungs-Information an die anmeldebereite Basisstation übermittelt wird, in der dann die Basisstation die übermittelte Authorisierungs-Information auf Korrektheit überprüft, und in der bei einem Erkennen einer korrekten Authorisierungs-Information durch die anmeldebereite Basisstation die Anmeldeprozedur für das Mobilteil erfolgreich abgeschlossen wird, **dadurch gekennzeichnet,**
- **dass** das Mobilteil (3) automatisch eine für das funkgesteuerte Kommunikationssystem (1) maßgebende Default-Authorisierungs-Information an die Basisstation (2) übermittelt,
- **dass** die Basisstation (2) bei der Prüfung auf Korrektheit der übermittelten Authorisierungs-Information die Korrektheit der übermittelten Authorisierungs-Information erkennt, solange eine bei der Prüfung auf Korrektheit herangezogene Referenz-Authorisierungs-Information noch nicht geändert wurde,
- **dass** die Basisstation (2) die übermittelte Authorisierungs-Information auf das Vorliegen der Default-Authorisierungs-Information überprüft, wenn die Basisstation (2) die Inkorrektheit der übermittelten Authorisierungs-Information erkennt,
- **dass** bei Vorliegen dann der Default-Authorisierungs-Information die Basisstation (2) in einen Anmeldestatus schaltet, der eine weitere Übermittlung von Authorisierungs-Informationen durch das Mobilteil zulässt und nach Erhalt einer solchen Authorisierungs-Information sich wieder in den gleichen Verfahrensschritt schaltet, in dem die Basisstation (2) die Authorisierungs-Information auf Korrektheit überprüft,
- und **dass** bei nicht Vorliegen dann der Default-Authorisierungs-Information die Basisstation (2) die Anmeldeprozedur abbricht.

2. Verfahren nach Anspruch 1,
**dadurch gekennzeichnet,**
**dass** für eine weitere Übermittlung der Authorisierungs-Information die Authorisierungs-Information vom Benutzer eingegeben wird.

3. Verfahren nach Anspruch 1 oder 2,
**dadurch gekennzeichnet,**
**dass** die Basisstation (2) die Anmeldeprozedur nach einer vorgegebenen Anzahl von sich wiederholenden Schleifendurchläufe abbricht.

4. Verfahren nach einem der Ansprüche 1 bis 3,
**dadurch gekennzeichnet,**
**dass** die Anmeldeprozedur zur Anmeldung eines Mobilteils (3) an eine zugehörige Basisstation (2) in der Basisstation (2) automatisch gestartet wird, wenn das Mobilteil (3) in die Lademulde (4) einer zugehörigen Basisstation (2) gestellt wird.

5. Verfahren nach einem der Ansprüche 1 bis 3,
**dadurch gekennzeichnet,**
**dass** die Anmeldeprozedur zur Anmeldung eines Mobilteils (3) an eine zugehörige Basisstation (2) in dem Mobilteil (3) automatisch gestartet wird, wenn das Mobilteil (3) in die Lademulde (4) einer zugehörigen Basisstation (2) gestellt wird, oder wenn das Mobilteil (3) eingeschaltet wird und noch an keiner Basisstation (2) angemeldet ist.

6. Verfahren nach einem der Ansprüche 1 bis 5,
**dadurch gekennzeichnet,**
**dass** das Mobilteil (3) die automatisch übermittelte Authorisierungs-Information durch Übermittlung einer zusätzlichen Information als automatisch übermittelte Authorisierungs-Information kennzeichnet.

7. Verfahren nach einem der Ansprüche 1 bis 6,
**dadurch gekennzeichnet,**
**dass** die Basisstation (2) dem Mobilteil (3) vor der Übermittlung der Authorisierungs-Information bekannt gibt, dass es das Verfahren nach einem der Ansprüche 1 bis 6 unterstützt.

8. Funkgesteuertes Kommunikationssystem, umfassend eine Basisstation und wenigstens ein einziges, an der Basisstation angemeldetes Mobilteil,
**dadurch gekennzeichnet,**
**dass** die Basisstation (2) und ein an der Basisstation (2) angemeldetes Mobilteil (3) für die Durchführung des Verfahrens nach Anspruch 1, 2 oder 3 jeweils entsprechend ausgebildete technische Mittel (7; 8) aufweisen.

9. Funkgesteuertes Kommunikationssystem nach Anspruch 8,
**dadurch gekennzeichnet,**
**dass** die jeweils entsprechend ausgebildeten technischen Mittel (7; 8) durch diskrete Bauelemente gebildet sind, die elektro- und nachrichtentechnisch miteinander zusammenwirken und wenigstens zum Teil programmgesteuert arbeiten.

## Claims

1. Method for registering a mobile part on a base station so that they form a radio-controlled communication system with one another, having method steps from an automatically or manually started registration procedure in which first of all the mobile part searches for a registration-ready base station, in which subsequently the mobile part transmits a piece of authorization information to the registration-ready base station, in which the base station then checks the transmitted authorization information for correctness, and in which recognition of a correct piece of authorization information by the registration-ready base station prompts the successful conclusion of the registration procedure for the mobile part, **characterized**
- **in that** the mobile part (3) automatically transmits a piece of default authorization information which is influential on the radio-controlled communication system (1) to the base station (2),
- **in that** the base station (2), in checking for the correctness of the transmitted authorization information, recognizes that the transmitted authorization information is correct so long as a piece of reference authorization information used for the check for correctness has not yet been changed,
- **in that** the base station (2) checks the transmitted authorization information for the presence of the default authorization information if the base station (2) recognizes that the transmitted authorization information is incorrect,
- **in that** if the default authorization information is present at that time then the base station (2) switches to a registration status which permits further transmission of authorization information by the mobile part, and, having received such authorization information, changes back to the same method step in which the base station (2) checks the authorization information for correctness,
- and **in that** if the default authorization information is not present at the time then the base station (2) terminates the registration procedure.

2. Method according to Claim 1,
**characterized**
**in that** a further transmission of the authorization information involves the authorization information being input by the user.

3. Method according to Claim 1 or 2,
**characterized**
**in that** the base station (2) terminates the registration procedure after a prescribed number of repeated loop passes.

4. Method according to one of Claims 1 to 3,
**characterized**
**in that** the registration procedure for registering a mobile part (3) on an associated base station (2) is started in the base station (2) automatically when the mobile part (3) is put into the charging tray (4) of an associated base station (2).

5. Method according to one of Claims 1 to 3,
**characterized**
**in that** the registration procedure for registering a mobile part (3) on an associated base station (2) is started in the mobile part (3) automatically when the mobile part (3) is put into the charging tray (4) of an associated base station (2) or when the mobile part (3) is switched on and is also not registered on a base station (2).

6. Method according to one of Claims 1 to 5,
**characterized**
**in that** the mobile part (3) identifies the automatically transmitted authorization information as automatically transmitted authorization information by transmitting an additional piece of information.

7. Method as claimed in one of Claims 1 to 6,
**characterized**
**in that** the base station (2) notifies the mobile part (3) that it supports the method according to one of Claims 1 to 6 prior to the transmission of the authorization information.

8. Radio-controlled communication system, comprising a base station and at least a single mobile part registered on the base station,
**characterized**
**in that** the base station (2) and a mobile part (3) registered on the base station (2) have respective appropriately designed technical means (7; 8) for carrying out the method according to Claim 1, 2 or 3.

9. Radio-controlled communication system according to Claim 8,
**characterized**
**in that** the respective appropriately designed technical means (7; 8) are formed by discrete components which interact with one another electrically and for telecommunication purposes and at least to some extent operate under program control.

## Revendications

1. Procédé d'entrée en communication d'une partie mobile avec une station de base pour former l'une avec l'autre un système de communication commandé par radio, comportant des étapes d'une procédure d'entrée en communication qui est démarrée automatiquement ou manuellement, dans laquelle la partie mobile cherche d'abord une station de base prête à entrer en communication, dans laquelle une information d'autorisation est ensuite transmise de la partie mobile à la station de base prête à entrer en communication, dans laquelle la station de base vérifie alors l'information d'autorisation transmise pour savoir si elle est correcte et dans laquelle, si l'information d'autorisation transmise est correcte, la procédure d'entrée en communication pour la partie mobile est terminée avec succès par la station de base prête à entrer en communication, **caractérisé en ce que**
- la partie mobile (3) transmet automatiquement à la station de base (2) une information d'autorisation par défaut déterminante pour le système de communication commandé par radio (1),
- lors de la vérification de l'information d'autorisation transmise pour savoir si elle est correcte, la station de base (2) reconnaît comme étant correcte l'information d'autorisation transmise tant qu'une information d'autorisation de référence consultée pour cela lors de la vérification n'a pas encore été modifiée,
- la station de base (2) vérifie l'information d'autorisation transmise quant à la présence de l'information d'autorisation par défaut lorsque la station de base (2) a reconnu l'information d'autorisation transmise comme étant incorrecte,
- en présence de l'information d'autorisation par défaut, la station de base (2) passe dans un état d'entrée en communication qui permet une nouvelle transmission d'informations d'autorisation par la partie mobile et qui, après réception d'une information d'autorisation de ce type, fait passer à nouveau dans l'étape dans laquelle la station de base (2) vérifie l'information d'autorisation pour savoir si elle est correcte,
- et, en l'absence d'information d'autorisation par défaut, la station de base (2) interrompt la procédure d'entrée en communication.

2. Procédé selon la revendication 1, **caractérisé en ce que**, pour une nouvelle transmission de l'information d'autorisation, l'information d'autorisation est entrée par l'utilisateur.

3. Procédé selon la revendication 1 ou 2, **caractérisé en ce que** la station de base (2) interrompt la procédure d'entrée en communication après un nombre prédéfini de répétitions de boucles.

4. Procédé selon l'une des revendications 1 à 3, **caractérisé en ce que** la procédure d'entrée en communication pour l'entrée en communication d'une partie mobile (3) avec une station de base (2) associée est démarrée automatiquement dans la station de base (2) lorsque la partie mobile (3) est placée dans le socle de charge (4) d'une station de base associée (2).

5. Procédé selon l'une des revendications 1 à 3, **caractérisé en ce que** la procédure d'entrée en communication pour l'entrée en communication d'une partie mobile (3) avec une station de base (2) associée est démarrée automatiquement dans la partie mobile (3) lorsque la partie mobile (3) est placée dans le socle de charge (4) d'une station de base associée (2) ou lorsque la partie mobile (3) est mise en service mais n'est encore entrée en communication avec aucune station de base (2).

6. Procédé selon l'une des revendications 1 à 5, **caractérisé en ce que** la partie mobile (3) caractérise l'information d'autorisation transmise automatiquement comme information d'autorisation transmise automatiquement en transmettant une information supplémentaire.

7. Procédé selon l'une des revendications 1 à 6, **caractérisé en ce que** 1a station de base (2) fait savoir à la partie mobile (3), avant la transmission de l'information d'autorisation, qu'elle supporte le procédé selon l'une des revendications 1 à 6.

8. Système de communication commandé par radio, comprenant une station de base et au moins une partie mobile unique entrée en communication avec la station de base, **caractérisé en ce que** la station de base (2) et une partie mobile (3) entrée en communication avec la station de base (2) comportent des moyens techniques (7 ; 8) conçus chacun de manière adaptée à 7.a mise en oeuvre du procédé selon la revendication 1, 2 ou 3.

9. Système de communication commandé par radio selon la revendication 8, **caractérisé en ce que** les moyens techniques (7 ; 8) conçus chacun de manière adaptée sont formés par des composants discrets qui coopèrent les uns avec les autres par des moyens techniques électriques ou informatiques et qui travaillent au moins en partie selon une commande programmée.
